# EUROPEAN PATENT APPLICATION

(11) **EP 4 443 607 A1**
(43) Date of publication of application: **09.10.2024**
(21) Application number: 24163988.9
(22) Date of filing: 15.03.2024
(51) Int. Cl.: H01M 10/613, H01M 10/617, H01M 10/625, H01M 10/647, H01M 10/6551, H01M 10/6554, H01M 10/653, H01M 10/6556, H01M 50/209, H01M 10/658

(54) **BATTERY PACK EQUIPPED WITH HEAT NON-DIFFUSION COOLING STRUCTURE USING COMB SHAPE**

(30) Priority: 26.03.2023 KR 20230039350; 21.07.2023 KR 20230095482
(71) Applicant: Samsung SDI Co., Ltd., Yongin-si, Gyeonggi-do 17084 (KR)
(72) Inventor: CHO, Mansik, 17084 Yongin-si (KR); HONG, Seongpyo, 17084 Yongin-si (KR)
(74) Representative: Marks & Clerk LLP

(57) **Abstract**

A battery pack equipped with a heat non-diffusion cooling structure having a comb shape, the battery pack includes a plurality of battery cells arranged in a first direction; a heat sink facing the plurality of battery cells in a second direction that is different from the first direction, the heat sink continuously extending along the plurality of battery cells; and thermal-conductive blocks between the heat sink and the plurality of battery cells, wherein the thermal-conductive blocks each include a base plate on one battery cell of the battery cells, and a first cavity and at least one fin alternately arranged in the first direction, the first cavity and the at least one fin being between the base plate and the heat sink.

## Description

### BACKGROUND

### 1. Field

Embodiments relate to a battery pack equipped with a heat non-diffusion cooling structure using a comb shape.

### 2. Description of the Related Art

Recently, the production and use of vehicles using electric energy or hybrid vehicles have increased significantly. Electric vehicles or hybrid vehicles are equipped with battery packs. A battery pack may include a plurality of battery modules, each of which includes a plurality of battery cells. Each battery cell may include a cathode, an anode, a separator, an active material, an electrolyte, and the like, and may be repeatedly chargeable and dischargeable through electrochemical reactions.

### SUMMARY

The embodiments may be realized by providing a battery pack equipped with a heat non-diffusion cooling structure having a comb shape, the battery pack including a plurality of battery cells arranged in a first direction; a heat sink facing the plurality of battery cells in a second direction that is different from the first direction, the heat sink continuously extending along the plurality of battery cells; and thermal-conductive blocks between the heat sink and the plurality of battery cells, wherein the thermal-conductive blocks each include a base plate on one battery cell of the plurality of battery cells, and a first cavity and at least one fin alternately arranged in the first direction, the first cavity and the at least one fin being between the base plate and the heat sink.

The at least one fin may include a plurality of fins adjacent to each other in the first direction with the first cavity therebetween, and the plurality of fins may be adjacent to each other in a third direction with a second cavity therebetween, the third direction being different from the first direction and the second direction.

The plurality of fins may be arranged in the first direction and the third direction such that a width of the first cavity in the first direction is less than a width of the second cavity in the third direction.

The battery pack may further include a third cavity between facing, outer fins of thermal-conductive blocks that are adjacent to each other in the first direction.

The third cavity may be between adjacent base plates in the first direction and is at a same level as the first cavity and the second cavity.

The battery pack may further include an insulating sheet between adjacent base plates, wherein the third cavity is between adjacent base plates adjacent in the first direction and on the insulating sheet between adjacent base plates, and a width of the third cavity in the first direction is greater than a width of the first cavity in the first direction.

The insulating sheet may be further between the plurality of battery cells that are adjacent to each other in the first direction, and the insulating sheet may extend at least partially between the thermal-conductive blocks that are adjacent to each other in the first direction.

The insulating sheet may extend in the second direction from between adjacent ones of the plurality of battery cells to between adjacent thermal-conductive blocks, and an extending end of the insulating sheet may be in the third cavity between outer, facing fins of thermal-conductive blocks that are adjacent to each other in the first direction.

The insulating sheet may have a first thickness in the first direction between the plurality of battery cells that are adjacent to each other, and the insulating sheet may have a second thickness in the first direction between the base plates of the thermal-conductive blocks that are adjacent to each other, the second thickness being different from the first thickness.

The second thickness may be less than the first thickness.

The insulating sheet may surround corners of facing side surfaces of the base plates of the thermal-conductive blocks that are adjacent to each other, and portions of top and bottom surfaces of the base plates adjacent to the side surfaces.

At least some of the above and other features of the invention are set out in the claims.

### BRIEF DESCRIPTION OF THE DRAWINGS

Features will be apparent to those of skill in the art by describing in detail embodiments with reference to the attached drawings in which:
FIG. 1 shows an example of a cooling structure of a comparative battery pack;
FIG. 2 is a side view of a battery pack shown in FIG. 1;
FIG. 3 shows a cooling structure of a battery pack according to the present disclosure;
FIG. 4 is an exploded perspective view of a main component of a cooling structure of a battery pack shown in FIG. 3;
FIG. 5 is a view seen from a third direction Z shown in FIG. 3;
FIG. 6 is an enlarged view of a thermal-conductive block region of FIG. 5; and
FIG. 7 is a view seen from a first direction X shown in FIG. 3.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

When a portion is referred to as "including" a component, the portion may not exclude another component but may further include another component unless stated otherwise. More specifically, it should be understood that the term "include", "have", or the like used herein is to indicate the presence of features, numbers, steps, operations, components, parts, or a combination thereof described in the specifications, and does not preclude the presence or addition of one or more other features, numbers, steps, operations, components, parts, or a combination thereof.

Singular forms include plural forms unless apparently indicated otherwise contextually.

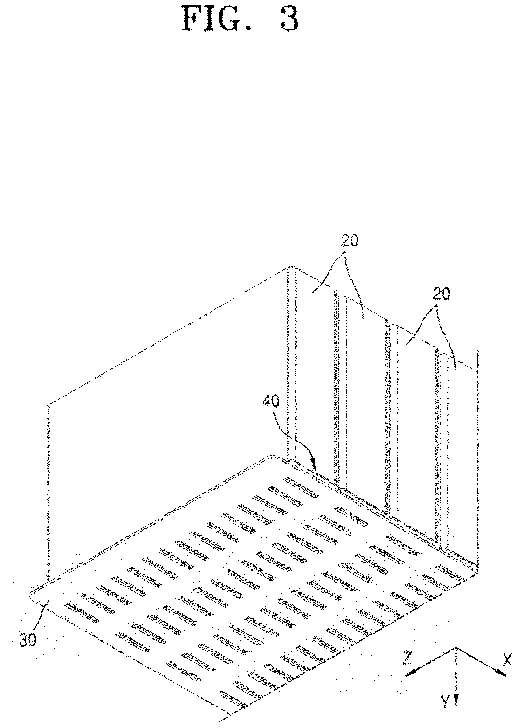

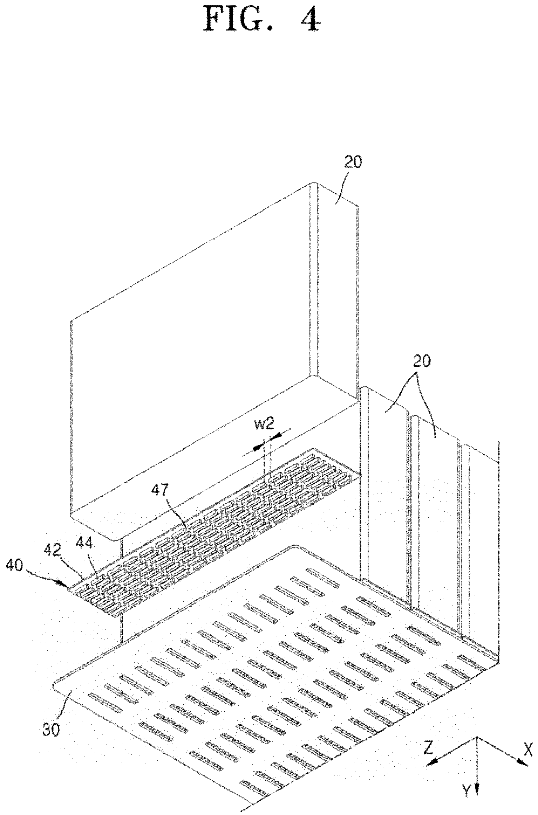

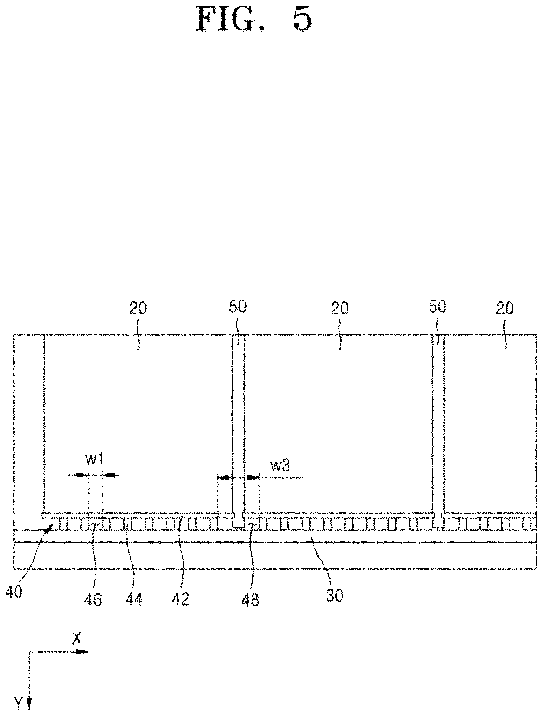

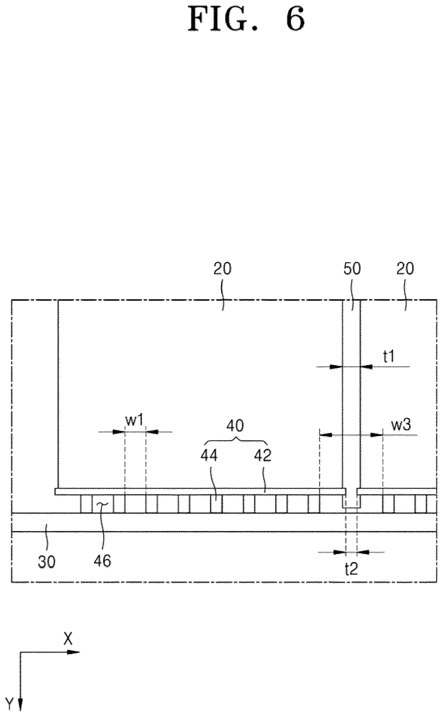

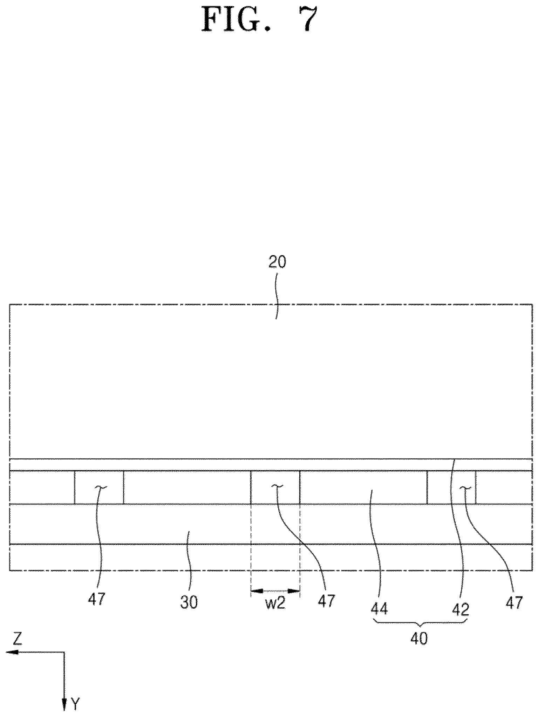

FIG. 3 shows a cooling structure of a battery pack according to the present disclosure. FIG. 4 is an exploded perspective view of a main component of a cooling structure of a battery pack shown in FIG. 3. FIG. 5 is a view seen from a third direction Z shown in FIG. 3. FIG. 6 is an enlarged view of a thermal-conductive block region of FIG. 5. FIG. 7 is a view seen from a first direction X shown in FIG. 3.

Referring to FIGS. 3 to 7, a battery pack equipped with a heat non-diffusion cooling structure using a comb shape according to embodiments of the present disclosure (hereinafter, referred to as a "battery pack") includes a plurality of battery cells 20, a heat sink 30, and a thermal-conductive block 40.

The plurality of battery cells 20 may be arranged inside a housing at intervals in the first direction X. The plurality of battery cells 20 may form one battery module.

The heat sink 30 faces the battery cell 20 in a second direction Y that is different from the first direction X. The heat sink 30 may continuously extend in the first direction X along a side of the adjacent battery cells 20. The heat sink 30 may be manufactured from a material having excellent thermal conductivity. The heat sink 30 may quickly transfer heat occurring in the battery cell 20 to outside to dissipate the heat.

The thermal-conductive block 40 is between the heat sink 30 and the battery cells 20. The thermal-conductive block 40 includes (i.e. each include) a base plate 42 and a fin 44.

The base plate 42 may be divided or separate for each battery cell 20 in the first direction X. In an implementation, one base plate 42 may be for or correspond with one battery cell 20. The fin 44 may be a structure that is between the base plate 42 and the heat sink 30. The fin 44 may include a cantilever structure extending from the base plate 42. In an implementation, a plurality of fins 44 may be provided. A first cavity 46 may be between the fins 44. The fins 44 and the first cavities 46 may be alternately arranged in the first direction X.

The fins 44 may be adjacent to each other in the first direction X with the first cavity 46 therebetween. The fins 44 may be adjacent to each other in a third direction Z (that is different from the first direction X and the second direction Y) with a second cavity 47 therebetween.

The fins 44 may be arranged in the first direction X and the third direction Z such that a width w1 of the first cavity 46 in the first direction X is less than a width w2 of the second cavity 47 in the third direction Z.

A third cavity 48 may be between the fins 44 closest to each other between the thermal-conductive blocks 40 adjacent to each other in the first direction X (e.g., the third cavity may be between outer, facing fins 44 of thermal-conductive blocks 40 corresponding with battery cells 20 that are adjacent in the first direction X).

The third cavity 48 may be formed across or between the base plates 42 that are adjacent to each other in the first direction X. The third cavity 48 may be formed at the same level in an extending direction of the first cavity 46 and the second cavity 47 formed between the same base plates 42 in the first direction X. In an implementation, the third cavity 48 may be at the same level as the first cavity 46 and the second cavity 47.

The third cavity 48 may be between the base plates 42 (and fins 44) that are adjacent to each other in the first direction X, and may be across (e.g., surround a bottom surface of) an insulating sheet 50 between the adjacent base plates 42. A width w3 of the third cavity 48 in the first direction X may be greater than the width w1 of the first cavity 46 in the first direction X.

The insulating sheet 50 may be between the battery cells 20 that are adjacent to each other in the first direction X. The insulating sheet 50 may extend between (at least a part of) the thermal-conductive blocks 40 that are adjacent to each other in the first direction X.

The insulating sheet 50 may extend (in the second direction Y) from between the adjacent battery cells 20 to between the adjacent thermal-conductive blocks 40. In an implementation, an extending end (e.g., bottom end) of the insulating sheet 50 may be in the third cavity 48 between the outer, facing fins 44 of the thermal-conductive blocks 40 that are adjacent to each other in the first direction X.

The insulating sheet 50 may have a first thickness t1 (in the first direction X) at a portion between the adjacent battery cells 20. The insulating sheet 50 may have a second thickness t2 (in the first direction X) at a portion between the base plates 42 of adjacent thermal-conductive blocks 40 In an implementation, the second thickness t2 may be less than the first thickness. In an implementation, the insulating sheet 50 may be compressed to form or provide the second thickness t2 that is less than the first thickness t1 between the base plates 42 of the adjacent thermal-conductive blocks 40.

The insulating sheet 50 may surround or cover corners of facing ends of the adjacent base plates 42. In an implementation, the insulating sheet may cover side surfaces of the base plates 42 of the thermal-conductive blocks 40 and top and bottom surfaces adjacent to the side surfaces.

Hereinbelow, the working effect of the present disclosure will be described in detail along a heat transfer path in a battery pack including the above-described components.

Referring to FIG. 6, heat may occur or be generated in the battery cell 20 as charging and discharging are repeated in the battery cell 20. The heat in the battery cell 20 may be transferred to the base plate 42 of the thermal-conductive block 40. The heat transferred to the base plate 42 may be transferred to the heat sink 30 in the second direction Y through the plurality of fins 44. The heat transferred to the heat sink 30 may be quickly conducted in the second direction Y and dissipated to outside. In this process, the heat transferred to the heat sink 30 should be prevented from being transferred to another adjacent battery cell 20 through the adjacent thermal-conductive block 40. Due to a structure of the thermal-conductive block 40, heat transfer from the base plate 42 to the fin 44 may be easily achieved, and heat transfer from the fin 44 to the base plate 42 may not be easily achieved. This may be because the heat may be cooled or dissipated by the air due to the presence of the first cavity 46, the second cavity 47, and the third cavity 48 between the fins 44. The thermal-conductive blocks 40 corresponding to each battery cell 20 may be spaced apart from each other, e.g., without being connected, thereby preventing heat conduction between the adjacent thermal-conductive blocks 40. The insulating sheet 50 may be between the adjacent battery cells 20, thereby effectively blocking heat transfer between the battery cells 20 (and between adjacent thermalconducive blocks 40). Thus, heat transfer from the battery cell 20 to the heat sink 30 may be easily and quickly performed, and heat transfer from the heat sink 30 to the battery cell 20 may be reduced or prevented. As a result, even if any one of the adjacent battery cells 20 were to be overheated, heat transfer to the adjacent battery cell 20 may be effectively blocked, and the heat may be quickly dissipated to outside through the heat sink 30, thereby greatly improving cooling efficiency of the battery pack.

As described above, according to the present disclosure, the first cavity and the fin of the thermal-conductive block (that is between the plurality of battery cells and the heat sink) may face the battery cells in the second direction that is different from the first direction, and heat transfer through the thermal-conductive block between the adjacent battery cells may be blocked, thereby improving cooling performance.

By way of summation and review, a battery pack may include a plurality of battery modules, and a lot of heat could be generated during repetitive charging and discharging processes in battery cells densely arranged in a small space. A battery pack may have a structure for effectively dissipating and cooling heat occurring or generated in the battery cell accommodated therein.

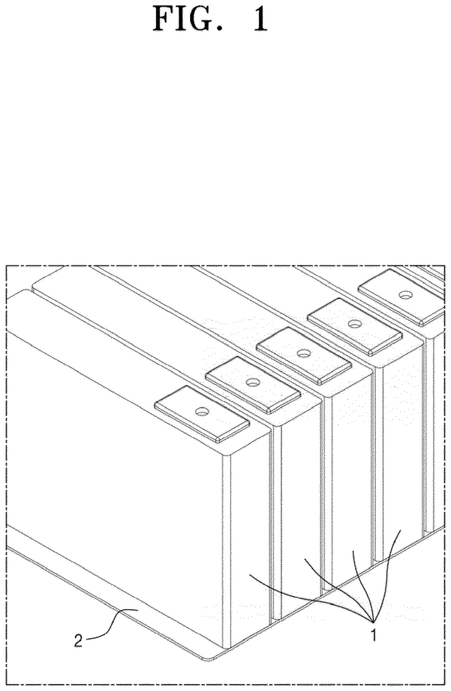

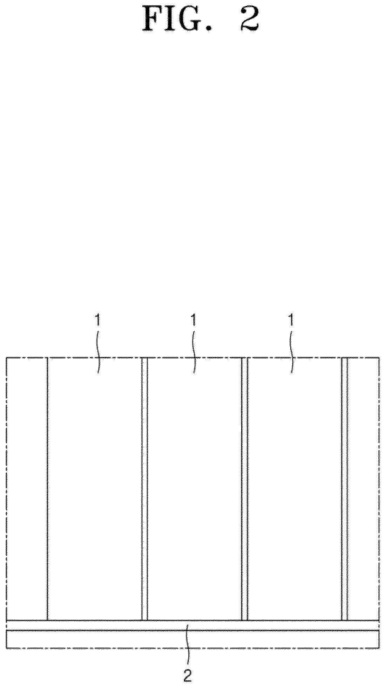

In one way to lower a temperature that increased due to heat generated in a battery cell inside a battery pack, heat generated in a battery cell 1 may be emitted to the outside by installing a cooling plate 2 under the battery cell 1 as shown in FIGS. 1 and 2. In this process, the heat generated in the battery cell 1 may be transferred to the cooling plate 2, and the heat is also transferred to the adjacent battery cell 1, which could damage the adjacent battery cell 1. If abnormal heat emission (such as thermal runaway) were to occur in one battery cell 1, the cooling plate 2 heated to high temperature could transfer the heat to the adjacent battery cell 1, which could damage the adjacent battery cell 1. Such an issue could occur a structure in which heat transfer between the battery cell 1 and the cooling plate 2 is bidirectional.

According to the present disclosure, due to the first cavity and the fin portion in the thermal-conductive block that connects the plurality of battery cells arranged in the first direction to the heat sink to face the battery cells in the second direction, heat transfer through the thermal-conductive block between the adjacent battery cells may be blocked, thereby improving cooling performance.

One or more embodiments may provide a battery pack having improved cooling performance by effectively blocking heat transfer between battery cells.

One or more embodiments may provide a battery pack having improved cooling performance by preventing heat transferred from a battery cell to a heat sink from also being transferred to an adjacent battery cell by way of an improved cooling structure of the battery pack.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack equipped with a heat non-diffusion cooling structure having a comb shape, the battery pack comprising:
a plurality of battery cells arranged in a first direction;
a heat sink facing the plurality of battery cells in a second direction that is different from the first direction, the heat sink continuously extending along the plurality of battery cells; and
thermal-conductive blocks between the heat sink and the plurality of battery cells,
wherein the thermal-conductive blocks each include:
a base plate on one battery cell of the plurality of battery cells, and
a first cavity and at least one fin alternately arranged in the first direction, the first cavity and the at least one fin being between the base plate and the heat sink.

2. The battery pack as claimed in claim 1, wherein:
the at least one fin includes a plurality of fins adjacent to each other in the first direction with the first cavity therebetween, and
the plurality of fins are adjacent to each other in a third direction with a second cavity therebetween, the third direction being different from the first direction and the second direction.

3. The battery pack as claimed in claim 2, wherein the plurality of fins are arranged in the first direction and the third direction such that a width of the first cavity in the first direction is less than a width of the second cavity in the third direction.

4. The battery pack as claimed in claim 3, further comprising a third cavity between facing, outer fins of thermal-conductive blocks that are adjacent to each other in the first direction.

5. The battery pack as claimed in claim 4, wherein the third cavity is between adjacent base plates in the first direction and is at a same level as the first cavity and the second cavity.

6. The battery pack as claimed in claim 4, further comprising an insulating sheet between adjacent base plates,
wherein:
the third cavity is between adjacent base plates adjacent in the first direction and on the insulating sheet between adjacent base plates, and
a width of the third cavity in the first direction is greater than a width of the first cavity in the first direction.

7. The battery pack as claimed in claim 6, wherein:
the insulating sheet is further between the plurality of battery cells that are adjacent to each other in the first direction, and
the insulating sheet extends at least partially between the thermal-conductive blocks that are adjacent to each other in the first direction.

8. The battery pack as claimed in claim 7, wherein:
the insulating sheet extends in the second direction from between adjacent ones of the plurality of battery cells to between adj acent thermal-conductive blocks, and
an extending end of the insulating sheet is in the third cavity between outer, facing fins of thermal-conductive blocks that are adjacent to each other in the first direction.

9. The battery pack as claimed in claim 7 or claim 8, wherein:
the insulating sheet has a first thickness in the first direction between the plurality of battery cells that are adjacent to each other, and
the insulating sheet has a second thickness in the first direction between the base plates of the thermal-conductive blocks that are adjacent to each other, the second thickness being different from the first thickness.

10. The battery pack as claimed in claim 9, wherein the second thickness is less than the first thickness.

11. The battery pack as claimed in any one of claims 7 to 10, wherein the insulating sheet surrounds corners of facing side surfaces of the base plates of the thermal-conductive blocks that are adjacent to each other, and portions of top and bottom surfaces of the base plates adjacent to the side surfaces.
